# EUROPÄISCHE PATENTANMELDUNG

(11) **EP 2 017 078 A2**
(43) Veröffentlichungstag der Anmeldung: **21.01.2009**
(21) Anmeldenummer: 08104567.6
(22) Anmeldetag: 27.06.2008
(51) Int. Cl.: B41F 7/26, B41F 13/26, B41F 13/28, B41F 31/26, B41F 31/30, F16C 13/00

(54) **Druckmaschinenwalze**

(30) Priorität: 16.07.2007 DE 102007032979
(71) Anmelder: Heidelberger Druckmaschinen AG, 69115 Heidelberg (DE)
(72) Erfinder: Buchleither, Dirk, 69190 Walldorf (DE); Michels, Jürgen, 69221 Dossenheim (DE); Schaffrath, Dieter, 64653 Lorsch (DE); Schönberger, Wolfgang, 69198 Schriesheim (DE); Schwaab, Bernhard, 67434 Neustadt (DE); Thielemann, Michael, 69115 Heidelberg (DE); Dörsam, Mathias, 69488 Birkenau (DE)

(57) **Zusammenfassung**

Eine Druckmaschinenwalze (3) umfasst eine Festachse (13) und einen Walzenmantel (9), der über ein erstes Drehlager (10), ein zweites Drehlager (11) und ein drittes Drehlager (12) auf der Festachse (13) gelagert ist, wobei das dritte Drehlager (12) außer Flucht mit dem ersten Drehlager (10) und dem zweiten Drehlager (11) und zwischen letzteren angeordnet ist, und wobei der Walzenmantel (9) mit einem Zahnrad (8) drehfest verbunden ist, das zusammen mit dem Walzenmantel (9) um die Festachse (13) drehbar ist.

## Beschreibung

Die vorliegende Erfindung betrifft eine Druckmaschinenwalze, ein damit ausgestattetes Feuchtwerk und ein Verfahren zu Walzenjustage.

Die Erfindung entstand vor folgendem Hintergrund: In ein Feuchtwerk aufweisenden lithographischen Druckmaschinen können beim Bedrucken besonders kleiner Bogenformate in den außerhalb der Formatbreite liegenden Seitenbereichen unerwünschte Wechselwirkungen zwischen der Druckfarbe und dem Feuchtmittel auftreten, die ihre Ursache in einem Überangebot an der Druckfarbe oder dem Feuchtmittel haben und die Druckqualität in einem spürbaren Maße mindern. Hat die Druckmaschine ein konventionelles Farbwerk mit Farbzonen, ist es durch deren Verstellung möglich, den angesprochenen Wechselwirkungen entgegen zu wirken. Durch eine dementsprechende Einstellung der außerhalb der Formatbreite liegenden Farbzonen kann das Verhältnis zwischen Druckfarbe und Feuchtmittel derart beeinflusst werden, dass die Störeffekte unterdrückt werden. Diese Möglichkeit besteht jedoch nicht, wenn die Druckmaschine ein Anilox-Farbwerk ohne Farbzonen aufweist. Die Rasterwalze eines solchen Anilox-Farbwerkes gibt über ihre gesamte Walzenlänge, also auch in den außerhalb der Formatbreite der zu bedruckenden Bogen liegenden Walzenbereichen, eine konstante Farbmenge ab, deren Größe von dem sogenannten Füllvolumen der Näpfchen oder Rillen des Rasters der Rasterwalze abhängt. Deshalb kann hierbei das zwischen der Druckfarbe und dem Feuchtmittel bestehende Verhältnis in den außerhalb der Formatbreite liegenden Bereichen nur durch die Veränderung der Feuchtmittelmenge beeinflusst werden, wozu eine dementsprechende Ausbildung des Feuchtwerks erforderlich wäre.

In der deutschen Offenlegungsschrift DE-OS 20 54 678 ist ein Feuchtwerk beschrieben, bei welchem eine ungleichmäßige Feuchtmitteldosierung durch eine Justage einer Schiefstellung einer Dosierwalze relativ zu einer Tauchwalze egalisiert wird. Die Dosierwalze ist in Hebeln gelagert, die um die Rotationsachse der Tauchwalze schwenkbar angeordnet sind. Um die Dosierwalze relativ zur Tauchwalze schief zu justieren, wird entweder nur der eine oder nur der andere Hebel geschwenkt. Infolge des Schwenkens des Hebels wird ein Walzenende der Dosierwalze entlang einer kreisbogenförmigen Bewegungslinie geschwenkt und die Dosierwalze in geringem Maße schraubenlinienförmig um die Tauchwalze herum sozusagen "gewickelt".

In DE 10 2005 015 791 A1 ist ein Feuchtwerk beschrieben, bei welchem sich eine Tauchwalze relativ zu einer daran anliegenden Dosierwalze oder gemäß einer anderen Variante die Dosierwalze relativ zur Tauchwalze in eine Schiefstellung justieren lässt, ohne dass dabei die eine Walze um die andere herum "gewickelt" wird. Diese Schiefstellungsjustage wird auch als "Schränkung" bezeichnet.

In den beiden Dokumenten des zuvor genannten Standes der Technik sind keine näheren Angaben zur Art und Weise des rotativen Antriebs der Walzen enthalten. Es ist denkbar, die Tauchwalze mit einem Zahnrad auszustatten und die Dosierwalze mit einem in das Zahnrad der Tauchwalze eingreifenden Zahnrad auszustatten, was hinsichtlich des rotativen Antriebs der beiden Walzen durch einen gemeinsamen Motor vorteilhaft wäre. Bezüglich einer solchen Zahnradverbindung ist aber sowohl das "Wickeln" (DE-OS 20 54 678) als auch das "Schränken" (DE 10 2005 015 791 A1) ungünstig, weil diese beiden Walzenjustageverfahren mit einer übermäßigen Belastung der beiden Zahnräder einhergehen. Das Zahnrad der zu "wickelnden" oder "schränkenden" Walze wird nämlich bei der Justage dieser Walze zusammen mit letzterer bewegt, wodurch dieses Zahnrad in eine ungünstige Stellung relativ zu dem anderen Zahnrad bewegt wird.

In der deutschen Auslegeschrift DE-AS 1264378 ist eine gattungsfremde Presswalze beschrieben, die zum Bearbeiten von bahnförmigen Textilstoffen geeignet ist. Die Presswalze hat einen Walzenmantel, in dem Stützglieder angeordnet sind, die auf einer exzentrisch gelagerten Welle sitzen. Durch ein Verdrehen der Welle kann die Durchbiegung der Presswalze der Durchbiegung einer Gegenwalze angeglichen werden.

In EP 0087730 A1 ist ein Zylinder einer Tiefdruck-Druckmaschine beschrieben, der einen äußeren Mantel und eine innere Welle umfasst, die koaxial mit dem äußeren Mantel angeordnet ist. Die Welle hat exzentrische Zapfen und trägt zwei Kugellager, auf denen der Mantel sitzt. Die Zapfen stecken jeweils in einer Buchse, die in eine relativ zu der Welle exzentrische Stellung drehbar ist, um den Mantel durchzubiegen. Der Mantel ist über weitere Kugellager auf den Buchsen gelagert.

Die Presswalze und der Zylinder, die in den beiden zuletzt genannten Dokumenten beschrieben sind, vermögen keinen wirklich hilfreichen Beitrag zur Lösung des bei Anilox-Farbwerken beigeordneten Feuchtwerken bestehenden Problems zu leisten.

Deshalb liegt der Erfindung die Aufgabe zugrunde, eine Druckmaschinenwalze zu schaffen, die in besonderem Maße für ihren Einsatz in einem einem Anilox-Farbwerk beigeordneten Feuchtwerk geeignet ist.

Diese Aufgabe wird durch eine Druckmaschinenwalze mit den Merkmalen des Anspruchs 1 gelöst. Die erfindungsgemäße Druckmaschinenwalze umfasst eine Festachse und einen Walzenmantel, der über ein erstes Drehlager, ein zweites Drehlager und ein drittes Drehlager auf der Festachse gelagert ist, wobei das dritte Drehlager außer Flucht mit dem ersten Drehlager angeordnet ist, außer Flucht mit dem zweiten Drehlager angeordnet ist und zwischen dem ersten Drehlager und dem zweiten Drehlager angeordnet ist, und wobei der Walzenmantel mit einem Zahnrad drehfest verbunden ist, das zusammen mit dem Walzenmantel um die Festachse drehbar ist. Hierbei gibt es also keine imaginäre, gerade, gemeinsame Axiallinie, auf der sowohl die imaginäre Rotationsachse des ersten Drehlagers als auch die imaginäre Rotationsachse des dritten Drehlagers liegt, und gibt es ebenso wenig eine imaginäre, gerade, gemeinsame Axiallinie, auf der sowohl die imaginäre Rotationsachse des zweiten Drehlagers als auch die imaginäre Rotationsachse des dritten Drehlagers liegt.

Das Zahnrad kann mit einem Zahnrad einer anderen Walze, an der die Druckmaschinenwalze anliegt, im Zahneingriff stehen, wobei sich eine durch Verstellung des dritten Drehlagers bewirkte Justage der Druckmaschinenwalze nicht nachteilig auf den Zahneingriff auswirkt. Eine infolge der Walzenjustage erhöhte Zahnradbelastung ist vorteilhafterweise ausgeschlossen.

Durch die über die beiden miteinander kämmenden Zahnräder gegebene rotative Kopplung der beiden Walzen, welche rotative Kopplung somit formschlüssig ist, kann der zwischen den beiden Walzen vorhandene Anpressdruck ohne die Gefahr eines die Druckqualität mindernden Walzenschlupfes reduziert werden. Bei einer nicht über die Zahnräder und stattdessen nur über die Walzenumfangsflächen, also frikativ, erfolgenden rotativen Kopplung müsste der Anpressdruck sehr hoch sein, um sicherzustellen, dass die getriebene Walze von der antreibenden Walze mit hinreichend geringem oder fast keinem Schlupf rotativ mitgenommen wird. Durch den hohen Anpressdruck würden die axiale Biegelinie des Gesamtsystems "verfälscht" werden und die zur Kompensation der Durchbiegung erfolgende Walzenjustage stark erschwert oder sogar unmöglich gemacht werden. Diese Probleme bestehen bei der formschlüssigen Zahnradkopplung der Walzen nicht.

Bei einer Weiterbildung der erfindungsgemäßen Druckmaschinenwalze weist die Festachse eine axiale Krümmung auf. Hierbei können die Rotationsachsen des ersten Drehlagers, des zweiten Drehlagers und des dritten Drehlagers zwar auf einer imaginären, gemeinsamen Mittellinie liegen, jedoch ist diese Mittellinie nicht gerade, sondern gekrümmt.

Bei einer weiteren Weiterbildung ist das dritte Drehlager im Wesentlichen achsparallel relativ zu dem ersten Drehlager versetzt angeordnet und ebenso im Wesentlichen achsparallel relativ zu dem zweiten Drehlager versetzt angeordnet. Hierbei können die imaginäre Rotationsachse des ersten Drehlagers und die imaginäre Rotationsachse des zweiten Drehlagers auf einer imaginären, geraden, gemeinsamen Axiallinie liegen, auf welcher die imaginäre Rotationsachse des dritten Drehlagers nicht liegt. Die imaginäre Rotationsachse des dritten Drehlagers ist exzentrisch versetzt relativ zu besagter Axiallinie und somit zu den imaginären Rotationsachsen des ersten Drehlagers und des zweiten Drehlagers.

Sowohl bei der erfindungsgemäßen Druckmaschinenwalze als auch bei deren beiden zuvor beschriebenen Weiterbildungen ist das dritte Drehlager weder koaxial mit dem ersten Drehlager noch koaxial mit dem zweiten Drehlager angeordnet.

Zur Erfindung gehört weiterhin ein Feuchtwerk, welches mit der erfindungsgemäßen Druckmaschinenwalze oder einer von deren Weiterbildungen ausgestattet ist. Das erfindungsgemäße Feuchtwerk einer Druckmaschine umfasst eine erste Walze und eine zweite Walze, wobei die erste Walze an der zweiten Walze anliegt und eine Festachse und einen Walzenmantel aufweist, der über ein erstes Drehlager, ein zweites Drehlager und ein drittes Drehlager auf der Festachse gelagert ist, wobei das dritte Drehlager außer Flucht mit dem ersten Drehlager und dem zweiten Drehlager und zwischen letzteren angeordnet ist, und wobei die zweite Walze ein erstes Zahnrad aufweist und der Walzenmantel der ersten Walze ein zweites Zahnrad aufweist und das erste Zahnrad und das zweite Zahnrad im Zahneingriff miteinander stehen.

Das erfindungsgemäße Feuchtwerk ist besonders für seinen Einsatz in einem Druckwerk geeignet, das ein Anilox-Farbwerk umfasst. Mittels des Feuchtwerks kann die in die außerhalb der Bogenformatbreite liegende Bereiche zugeführte Feuchtmittelmenge derart dosiert werden, dass unerwünschte Wechselwirkungen zwischen der Druckfarbe und dem Feuchtmittel innerhalb dieser Bereiche vermieden werden.

Ein weiterer Vorteil ist folgender: Aufgrund der reibungsmindernden Eigenschaft des Feuchtmittels wäre eine schlupffreie Abrollung der beiden Walzen aufeinander durch rotative Mitnahme per Walzenfriktion nur unter Inkaufnahme eines sehr hohen Anpressdruckes erreichbar. Da die Walzen von Anilox-Farbwerken beigeordneten Feuchtwerken Gummibezüge mit vergleichsweise geringer Shore-Härte aufweisen, müsste eine übermäßige Walzenbeistellung eingestellt werden, um den sehr hohen Anpressdruck zu erreichen. Die übermäßige Walzenbeistellung und die daraus resultierende übermäßige Verformung des Gummibezuges wären im Hinblick auf die Kompensation der Walzendurchbiegung kontraproduktiv. Beim erfindungsgemäßen Feuchtwerk ist aufgrund der über die Zahnräder gegebenen antriebsmäßigen Verbindung der beiden Walzen miteinander die reibungsmindernde Eigenschaft des Feuchtmittels unschädlich, so dass eine zum Erzielen einer hohen Druckqualität vorteilhafte, geringe Walzenbeistellung verwendet werden kann.

Besagte erste Walze kann hierbei durch die erfindungsgemäße Druckmaschinenwalze oder eine ihrer Weiterbildungen gebildet sein.

Bei einer Weiterbildung des Feuchtwerks ist die Festachse in einer Stellvorrichtung zum zu und von der zweiten Walze hin und weg erfolgenden Schwenken des dritten Drehlagers gelagert. Mittels der Stellvorrichtung kann die Festachse derart justiert werden, dass dabei das auf der Festachse sitzende dritte Drehlager zur zweiten Walze hin geschwenkt wird oder von der zweiten Walze weg geschwenkt wird.

Bei einer weiteren Weiterbildung ist die erste Walze oder die zweite Walze eine Tauchwalze. Die andere Walze, welche nicht die Tauchwalze ist, kann eine Dosierwalze sein.

Zur Erfindung gehören auch eine Druckmaschine, die mit der erfindungsgemäßen oder einer ihrer Weiterbildungen entsprechend ausgebildeten Druckmaschinenwalze ausgestattet ist, und eine Druckmaschine, die mit dem erfindungsgemäßen oder einer dessen Weiterbildungen entsprechend ausgebildeten Feuchtwerk ausgestattet ist.

Letztlich gehört zur Erfindung ein Verfahren zur Walzenjustage in einer Druckmaschine, wobei eine erste Walze mit einer Festachse und einem darauf drehbar gelagerten Walzenmantel relativ zu einer zweiten Walze justiert wird, indem bei bestehendem Zahneingriff eines ersten Zahnrades der zweiten Walze mit einem zweiten Zahnrad des Walzenmantels durch ein Drehen der Festachse eine gekrümmte Mittellinie des Walzenmantels konvex oder konkav relativ zu der zweiten Walze eingestellt wird. Besagte erste Walze kann hierbei durch die erfindungsgemäße Druckmaschinenwalze oder einer ihrer Weiterbildungen gebildet sein.

Insbesondere bei der konkaven Einstellung der Mittellinie zeigen sich die Vorteile der Ausstattung der zweiten Walze und des Walzenmantels mit den Zahnrädern. Die konkave Einstellung wäre unvermeidlich mit einer Verringerung der zwischen den Umfangsflächen der zweiten Walze und des Walzenmantels vorhandenen Friktion verbunden, wodurch bei einem nur über diese Friktion erfolgenden rotativen Antreibens des Walzenmantels durch die zweite Walze ein die Druckqualität mindernder Schlupf zwischen den beiden Umfangsflächen auftreten würde. Im Gegensatz dazu kann bei dem erfindungsgemäßen Verfahren zur Walzenjustage durch die per Zahneingriff, also formschlüssig, erfolgende rotative Kopplung der zweiten Walze mit der ersten Walze bzw. deren Walzenmantel unter allen Bedingungen gewährleistet werden, dass die Umfangsflächen des Walzenmantels und der zweiten Walze mit der gleichen Umfangsoberflächen-Geschwindigkeit, also schlupffrei, aufeinander abrollen. Dadurch kann eine hohe Druckqualität erreicht werden.

Weitere konstruktiv und funktionell vorteilhafte Weiterbildungen der Erfindung ergeben sich aus der nachfolgenden Beschreibung bevorzugter Ausführungsbeispiele und der dazugehörigen Zeichnung.

In dieser zeigen:
- Figuren 1a bis 3e: ein erstes Ausführungsbeispiel der Druckmaschinenwalze, wobei diese eine Tauchwalze ist und an einer Dosierwalze anliegt, und wobei das dritte Drehlager auf einem exzentrischen Absatz der Festachse sitzt,
- Figuren 1a bis 1e: eine erste Einstellung der Druckmaschinenwalze des ersten Ausführungsbeispiels, wobei an den Walzenenden mehr Feuchtmittel als in der Walzenmitte dosiert wird,
- Figuren 2a bis 2e: eine zweite Einstellung der Druckmaschinenwalze des ersten Ausführungsbeispiels, wobei an den Walzenenden genauso viel Feuchtmittel wie in der Walzenmitte dosiert wird,
- Figuren 3a bis 3e: eine dritte Einstellung der Druckmaschinenwalze des ersten Ausführungsbeispiels, wobei an den Walzenenden weniger Feuchtmittel als in der Walzenmitte dosiert wird;
- Figuren 4a bis 4e: ein zweites Ausführungsbeispiel der Druckmaschinenwalze, wobei das erste Drehlager und das zweite Drehlager auf jeweils einem exzentrischen Absatz der Festachse sitzen,

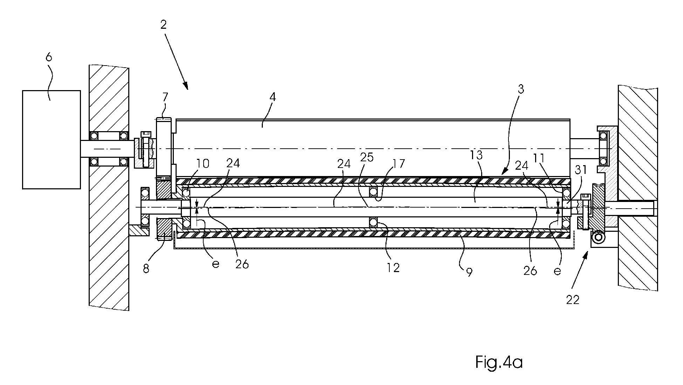

- Figuren 4a bis 4d: eine erste Einstellung der Druckmaschinenwalze des zweiten Ausführungsbeispiels, wobei an den Walzenenden mehr Feuchtmittel als in der Walzenmitte dosiert wird,

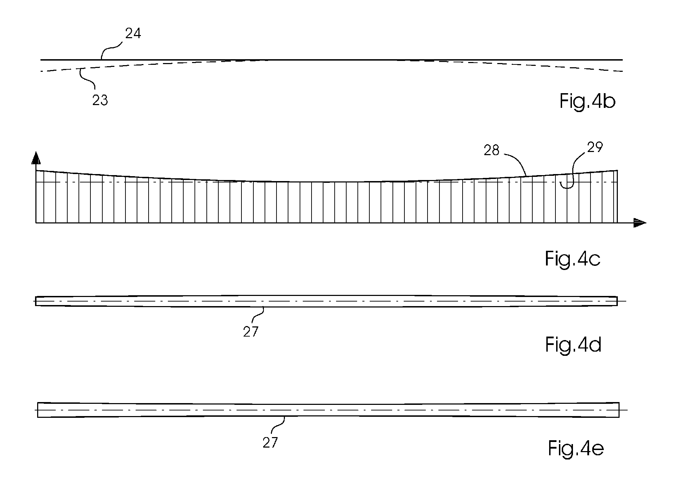

- Figur 4e: eine zweite Einstellung der Druckmaschinenwalze des zweiten Ausführungsbeispiels, wobei an den Walzenenden weniger Feuchtmittel als in der Walzenmitte dosiert wird;

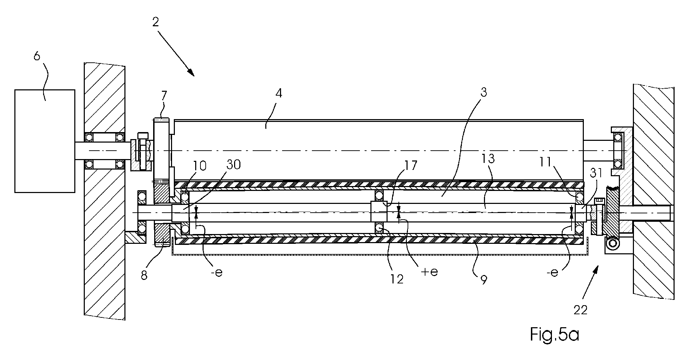

- Figuren 5a bis 5c: als drittes Ausführungsbeispiel der Druckmaschinenwalze eine Kombination des ersten Ausführungsbeispiels mit dem zweiten Ausführungsbeispiel, wobei das mittlere, dritte Drehlager auf einem exzentrischen Absatz der Festachse sitzt und die beiden äußeren Drehlager auf jeweils einem Absatz sitzen, der relativ zum Absatz des dritten Drehlagers entgegengesetzt exzentrisch ist;

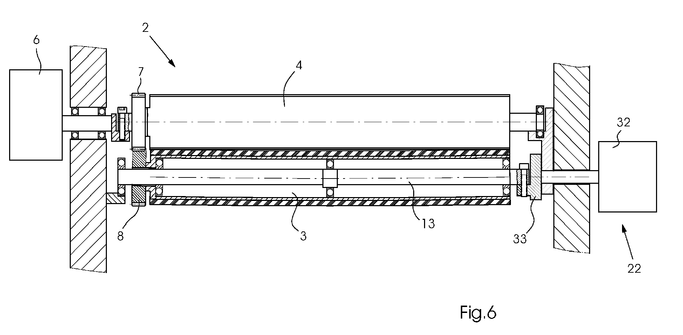

- Figur 6: als viertes Ausführungsbeispiel der Druckmaschinenwalze eine Modifikation des ersten Ausführungsbeispiels, wobei der Festachse ein Stellmotor beigeordnet ist;

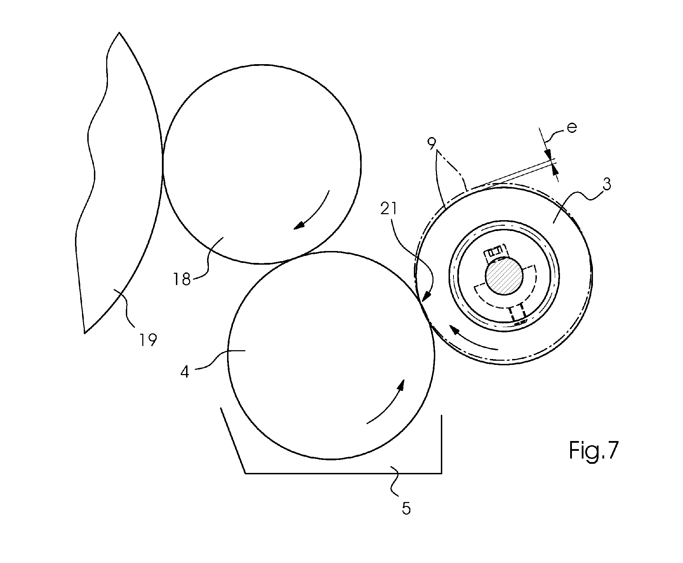

- Figur 7: als fünftes Ausführungsbeispiel eine mögliche Modifikation der zuvor genannten Ausführungsbeispiele, wobei die Druckmaschinenwalze eine Dosierwalze ist, welche an einer Tauchwalze anliegt;

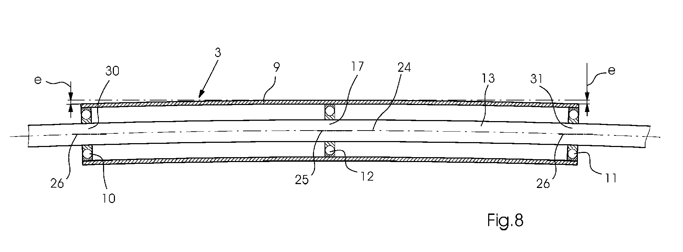

- Figur 8: als sechstes Ausführungsbeispiel eine mögliche Modifikation der zuvor genannten Ausführungsbeispiele, wobei die Festachse gekrümmt ist und

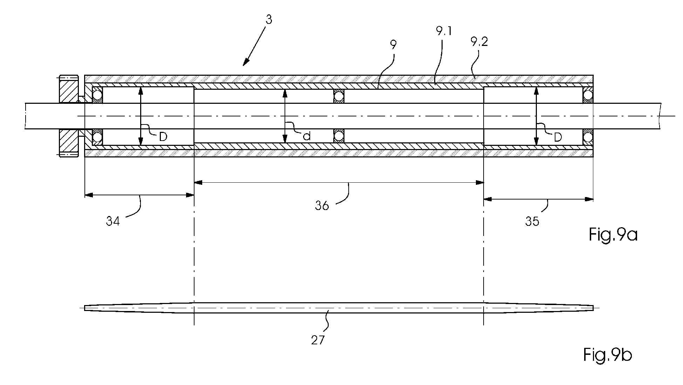

- Figur 9: eine alternative Ausbildung eines Walzenmantels der Druckmaschinenwalze.

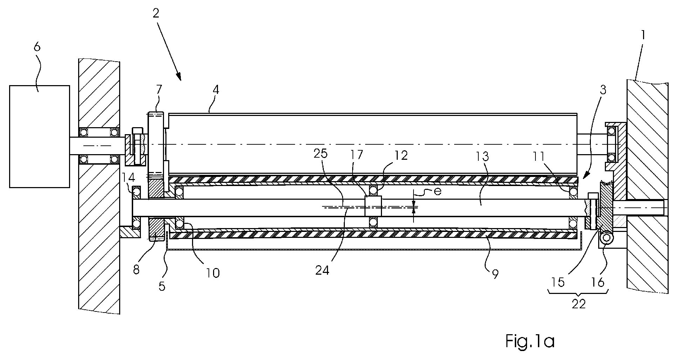

Einander entsprechende Bauteile und Elemente sind in den Figuren 1a bis 9 mit den gleichen Bezugszeichen bezeichnet.

Figuren 1a, 2a und 3a zeigen eine Druckmaschine 1 für den lithographischen Offsetdruck, umfassend ein Feuchtwerk 2 mit einer Walze 3 und einer weiteren Walze 4. Die Walze 3 ist eine Tauchwalze und in einem Feuchtkasten 5 angeordnet, um daraus das Feuchtmittel zu schöpfen. Die Walze 3 liegt an der weiteren Walze 4 an, um auf diese das geschöpfte Feuchtmittel zu übertragen. Ein elektrischer Motor 6 treibt die weitere Walze 4 rotativ an. Ein mit der weiteren Walze 4 drehfest verbundenes, erstes Zahnrad 7 kämmt mit einem zweiten Zahnrad 8. Das zweite Zahnrad 8 ist mit einem rohrförmigen bzw. hohlzylindrischen Walzenmantel 9 der Walze 3 drehfest verbunden. Der Walzenmantel 9 ist über walzenendseitige bzw. axial außen liegende Drehlager 10, 11 und ein dazwischen liegendes bzw. mittleres Drehlager 12 drehbar auf einer Festachse 13 gelagert. Die Außendurchmesser der Drehlager 10, 11, 12 entsprechen im Wesentlichen dem Innendurchmesser des Walzenmantels 9 an der jeweiligen Lagerstelle. Über die Zahnräder 7, 8 wird durch den Motor 6 der Walzenmantel 9 rotativ angetrieben, so dass sich letzterer im Druckbetrieb um die Festachse 13 herum dreht. Im Gegensatz zum Walzenmantel 9 dreht sich die Festachse 13 während des Druckbetriebs nicht fortlaufend.

Es ist jedoch möglich, die Festachse 13 zum Zwecke einer nachfolgend noch näher erläuterten Justage der Walze 3 während oder außerhalb des Druckbetriebs geringfügig zu drehen. Durch dieses Drehen wird die Festachse 13 aus einer fixen Drehstellung in eine andere fixe Drehstellung verstellt. Die Festachse 13 ist an ihrem einen Ende mittels eines Drehlagers 14 drehbar gelagert, welches wie auch die zuvor genannten Drehlager 10, 11, 12 ein Wälzlager ist. An ihrem anderen Ende ist die Festachse 13 drehfest mit einem Schneckenrad 15 verbunden, dass mit einer Schnecke 16 im Zahneingriff steht. Das Schneckengetriebe bildet eine Stellvorrichtung 22 zum Justieren der Drehstellung der Festachse 13. Die Schnecke 16 kann einen Sechskant oder ein ähnliches Profil für einen Steckschlüssel aufweisen, mittels welchem der Bediener die Festachse 13 drehen kann. Es kann eine Skala vorhanden sein, an welcher der Bediener die jeweils eingestellte Drehstellung der Festachse 13 ablesen kann.

Das mittlere Drehlager 12 sitzt auf einem Lagersitz 17, der exzentrisch relativ zu Lagersitzen der beiden außen liegenden Drehlager 10, 11 ausgebildet ist. Die Lagersitze der beiden außen liegenden Drehlager 10, 11 werden durch die Umfangsfläche der Festachse 13 gebildet. Der Lagersitz 17 des mittleren Drehlagers 12 wird durch einen vorspringenden Absatz gebildet, dessen Umfangsfläche nicht konzentrisch mit der zuvor bereits erwähnten Umfangsfläche der Festachse 13 verläuft. Auf der Umfangsfläche dieses vorspringenden Absatzes sitzt der Innenring des mittleren Drehlagers 12 fest, dessen Außenring in dem Walzenmantel 9 festsitzt. Der Außendurchmesser dieses Außenringes entspricht im Wesentlichen dem korrespondierenden Innendurchmesser des Walzenmantels 9.

Es wäre ebenso möglich, den Lagersitz 17 in Form einer Buchse auszubilden, deren Bohrung nicht konzentrisch mit der Buchsenumfangsfläche verläuft. Hierbei würde die Buchse auf der Umfangsfläche der Festachse 13 festsitzen und würde der Innenring des mittleren Drehlagers 12 auf der Umfangsfläche der Buchse festsitzen.

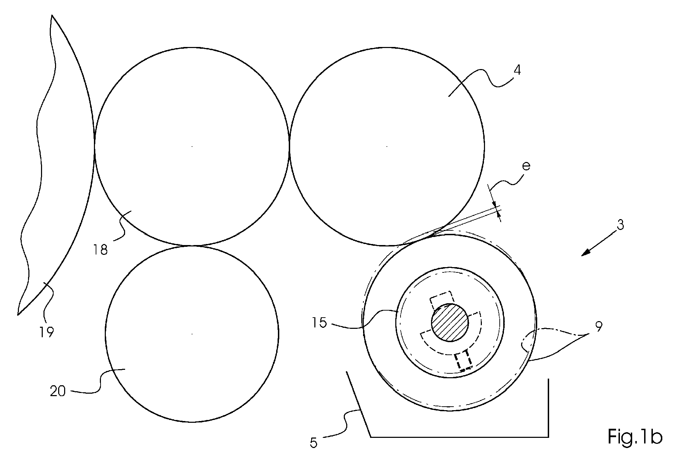

Die Figuren 1b, 2b und 3b zeigen das Feuchtwerk 2 in seitlicher und vereinfachter Darstellung. Die weitere Walze 4 liegt an einer Feuchtauftragwalze 18 an, welche an einem Druckformzylinder 19 anliegt. Eine axial changierende Reibwalze 20 liegt nur an der Feuchtauftragwalze 18 an. Die Walze 3 und die weitere Walze 4 bilden zusammen einen gemeinsamen Walzenspalt 21. Mit durchgehender Kreislinie dargestellt ist die endseitige Umfangskontur, welche der Walzenmantel 9 an jedem seiner beiden Enden aufweist. Mit strichpunktierter Kreislinie dargestellt ist die mittige Umfangskontur, welche der Walzenmantel 9 in seiner axialen Mitte aufweist.

In den Figuren 1b, 2b und 3b sind stark schematisierte Seitendarstellungen des Feuchtwerks 2 aus den Figuren 1a, 2a und 3a gezeigt, wobei ein Hilfsgestell, in dem die weitere Walze 4 gelagert ist, und eine Maschinenseitenwand, in der das Hilfsgestell und die Walze 3 gelagert sind, aus Gründen besserer Übersichtlichkeit nicht mit dargestellt sind.

Gemäß Figur 1a ist die Festachse 13 und zusammen mit dieser der Lagersitz 17 in eine fixe Drehstellung verstellt, in welcher der Lagersitz 17 zur weiteren Walze 4 hin vorspringt. Demzufolge ist eine Rotationsachse 25 des mittleren Drehlagers 12 um den Betrag einer Exzentrizität e relativ zu einer Rotationsachse 24 der Festachse 13 und der außen liegenden Drehlager 10, 11 zur weiteren Walze 4 hin versetzt. Infolgedessen drückt das mittlere Drehlager 12 derart auf die Innenfläche des Walzenmantels 9, dass diesem eine axiale Krümmung aufgeprägt wird. Infolge dieser Krümmung verläuft in dem Walzenspalt 21 eine Mantellinie des Walzenmantels 9 relativ zur weiteren Walze 4 konvex, wie dies in Figur 1a zu sehen ist.

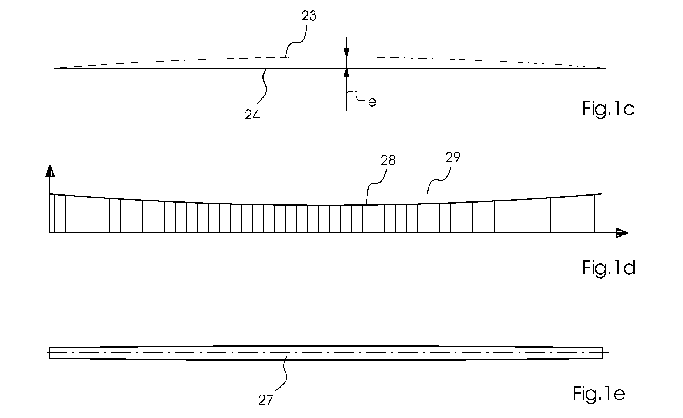

Figur 1c zeigt, dass eine Mittellinie 23 des Walzenmantels 9 hierbei ebenfalls konvex verläuft. Figur 1b zeigt, dass in besagter fixer Drehstellung die mittige Umfangskontur (Phantomlinie) des Walzenmantels 9 in stärkerem Maße als die endseitige Umfangskontur (Volllinie) des Walzenmantels 9 zur weiteren Walze 4 hin verschoben ist. Dadurch ist ein von dem Walzenmantel 9, der einen gummielastischen Bezug aufweist, zusammen mit der weiteren Walze 4 in dem Walzenspalt 21 gebildeter Kontaktstreifen 27 im Bereich der axialen Walzenmitte am breitesten und im Bereich der Walzenenden am schmalsten, wie dies in Figur 1e dargestellt ist. Der Kontaktstreifen 27 hat also die Form einer Projektion einer langgestreckten Tonne. Daraus resultiert eine in der axialen Walzenmitte gegenüber den Walzenenden erhöhte Pressung zwischen dem Walzenmantel 9 und der weiteren Walze 4 in dem Walzenspalt 21, wobei die Wirkung des Walzenmantels 9 mit jener einer balligen Walze vergleichbar ist. Figur 1d zeigt ein Diagramm, dessen Abszisse die Walzenlänge abbildet und dessen Ordinate die Schichtdicke des von der Walze 3 auf die weitere Walze 4 übertragenen Feuchtmittelfilms abbildet. Ein Vergleich des Kurvenverlaufs der Schichtdicke 28 mit einer Referenzlinie 29, welche eine über die Walzenlänge gleichmäßige Schichtdicke wiedergibt, zeigt, dass die Menge des übertragenen Feuchtmittels zur Walzenmitte hin zurückgeht und zu den Walzenrändern hin zunimmt.

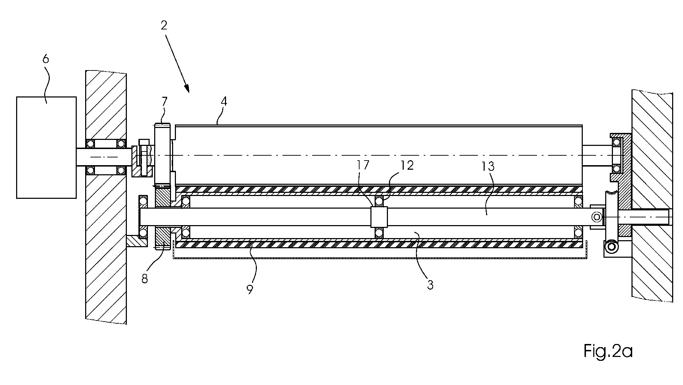

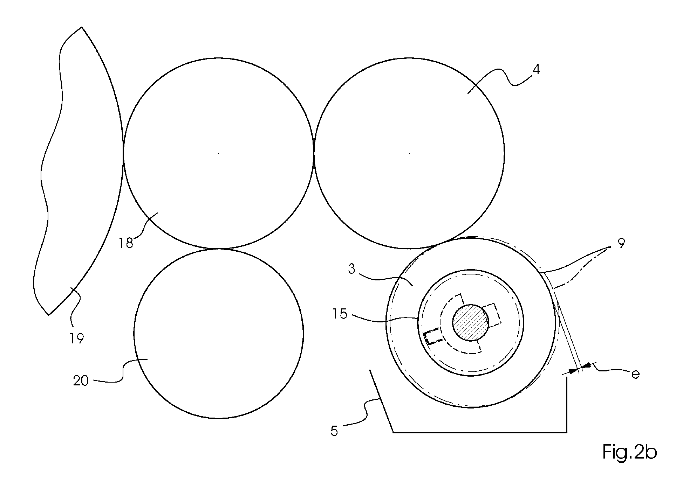

Figur 2a zeigt das Feuchtwerk 2 in einer Einstellung, in der die Festachse 13 in eine fixe Drehwinkelstellung verstellt ist, welche gegenüber jener aus Figur 1a um einen 90° betragenden Drehwinkel versetzt ist. Dies wird bei einem Vergleich der Figuren 1a und 2a anhand der Ausrichtung der Schraube, mittels welcher die Festachse 13 an dem Schneckenrad 15 angeschraubt ist, besonders gut deutlich. In der fixen Drehwinkelstellung gemäß Figur 2a springt der exzentrische Lagersitz 17 senkrecht zur Bildebene der Figur 2a vor und nicht mehr in Richtung der weiteren Walze 4. Demzufolge besteht hierbei die Exzentrizität e nicht mehr innerhalb der gemeinsamen Ebene der Rotationsachsen der beiden Walzen 3, 4, sondern in einer zu dieser Ebene senkrechten Ebene, wie dies auch aus Figur 2b ersichtlich wird. Durch die von der Festachse 13 über das mittlere Drehlager 12 dem Walzenmantel 9 aufgezwungene Krümmung ist die mit strichpunktierter Kreislinie dargestellte mittige Umfangskontur des Walzenmantels 9 gegenüber der mit durchgehender Kreislinie dargestellten endseitigen Umfangskontur des Walzenmantels 9 in eine zur gemeinsamen Ebene der Rotationsachsen der Walzen 3, 4 senkrechte Richtung verschoben.

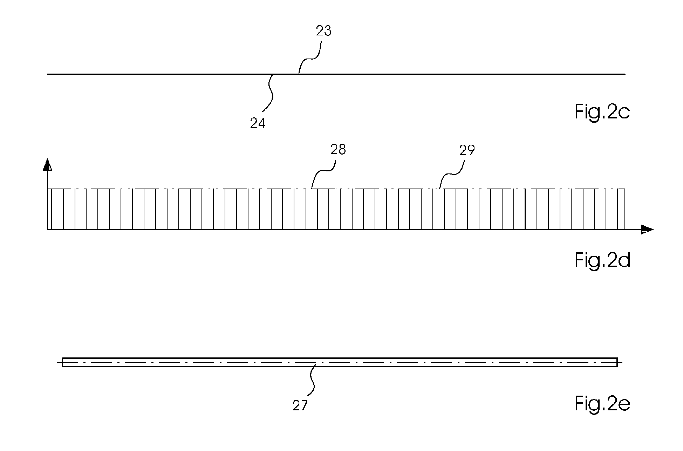

In eine der Figur 2a zugrundeliegende Blickrichtung gesehen verläuft hierbei eine geradlinige Projektion der gekrümmten Mittellinie 23 des Walzenmantels 9 kongruent mit der Rotationsachse 24 der Festachse 13, wie dies in Figur 2c gezeigt ist. Besagte Blickrichtung ist entlang einer imaginären gemeinsamen Tangente der Walzen 3, 4. Aus Figur 2a wird deutlich, dass in diese Blickrichtung gesehen in dem Walzenspalt 21 eine Mantellinie der Walze 3 kongruent mit einer Mantellinie der weiteren Walze 4 verläuft. Demzufolge herrscht im Walzenspalt 21 über die gesamte Länge der Walzen 3, 4 zwischen diesen eine gleich starke Walzenpressung.

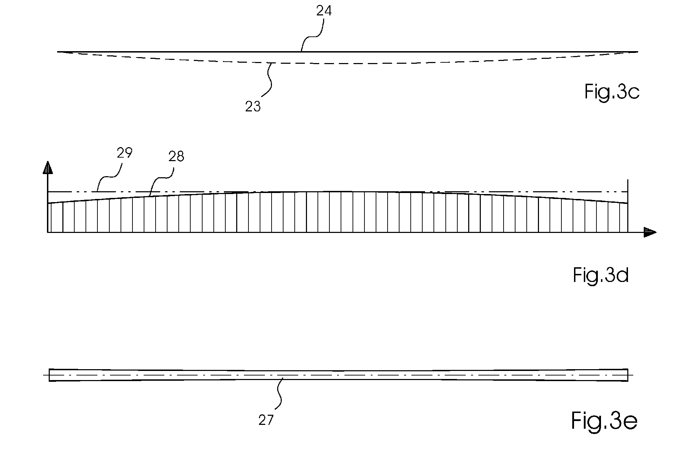

Der daraus resultierende Kontaktstreifen 27 ist in Figur 2e abgebildet und im Wesentlichen über seine gesamte Länge von konstanter Breite. Der Kontaktstreifen 27 ist also zur axialen Walzenmitte hin weder ausgebaucht, wie in Figur 1e, noch eingeschnürt, wie in Figur 3e. Demzufolge wirkt die Walze 3 bei der Flüssigkeitsübertragung wie eine idealzylindrische Walze und nicht mehr wie in Figur 1a wie eine ballige Walze. Das mit dem Diagramm in Figur 1d vergleichbare Diagramm in Figur 2d zeigt, dass die Kurve der Schichtdicke 28 mit der Referenzlinie 29 zusammenfällt und somit von der Walze 3 eine über deren gesamte wirksame Länge gleichmäßig dicke Feuchtmittelschicht auf die weitere Walze 4 übertragen wird.

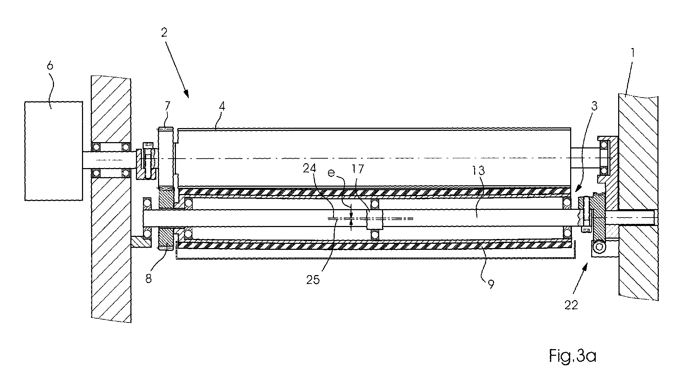

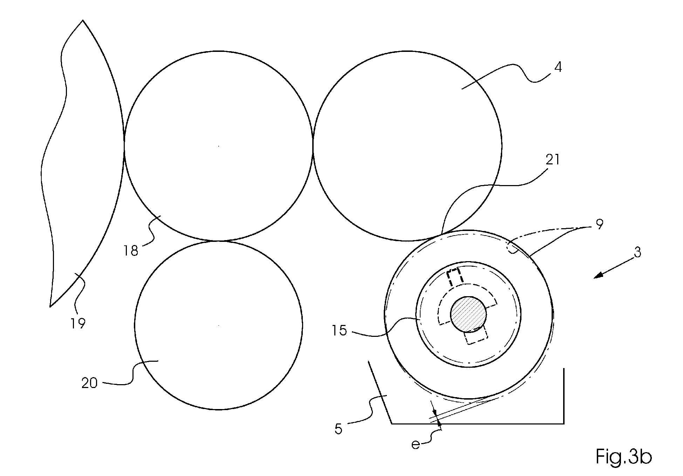

Die Figuren 3a bis 3e zeigen eine Einstellung des Feuchtwerks 2, bei welcher die Festachse 13 und mit dieser der exzentrische Lagersitz 17 relativ zur in den Figuren 1a bis 1e gezeigten Drehwinkelstellung um einen 180° betragenden Winkel verdreht sind. Demgemäß ist die zwischen der Rotationsachse 24 der Festachse 13 und der Rotationsachse 25 des mittleren Lagersitzes 17 bestehende Exzentrizität e von der weiteren Walze 4 weg gerichtet. Dadurch zwingt die Festachse 13 über das mittlere Drehlager 12 dem Walzenmantel 9 eine bezüglich der weiteren Walze 4 konkave Krümmung auf. Figur 3b zeigt, dass hierbei die mittige Umfangskontur (Phantomlinie) des Walzenmantels 9 auf einen größeren Abstand relativ zur Rotationsachse der weiteren Walze 4 als die endseitige Umfangskontur (Volllinie) des Walzenmantels 9 gestellt ist. Figur 3c zeigt, dass die Mittellinie 23 des Walzenmantels 9 konkav relativ zur Rotationsachse 24 der Festachse 13 verläuft.

Dem in Figur 3c gezeigten geradlinigen Verlauf der Rotationsachse 24 liegt die Idealvorstellung zugrunde, dass die Festachse 13 absolut biegesteif ist. In der Praxis wird sich auch die Festachse 13 durch die zwischen letzterer und dem Walzenmantel 9 wirkenden Kräfte etwas biegen, jedoch kann durch eine dementsprechende Auswahl des Materials der Festachse 13 und des Walzenmantels 9 und einer dementsprechenden Dimensionierung des Querschnitts der Festachse 13 und des Walzenmantels 9 eine gegenüber dem Walzenmantel 9 wesentlich biegesteifere Ausbildung der Festachse 13 erreicht werden, so dass deren axiale Durchbiegung nicht funktionsbeeinträchtigend ist und im Rahmen vorliegender Prinzipdarstellung nicht näher berücksichtigt werden braucht.

Figur 3e zeigt, dass die konkave Durchbiegung des Walzenmantels 9 eine zur axialen Walzenmitte hin zunehmend eingeschnürtere Form des Kontaktstreifens 27 im Walzenspalt 21 zur Folge hat. Der Kontaktstreifen 27 hat im Prinzip die Form eines extrem langgestreckten Diabolos. Ein Vergleich der in den Figuren 1e, 2e und 3e dargestellten Einstellungen des Kontaktstreifens 27 macht deutlich, dass bei dem in den Figuren 1a bis 3e dargestellten Ausführungsbeispiel die Justage der Walzenkrümmung eine Veränderung der Breite des Kontaktstreifens 27 in dessen Mittelabschnitt zur Folge hat, aber im Wesentlichen keine Änderung der Breite des Kontaktstreifens 27 an dessen Enden. Die in Figur 3e dargestellte Kontaktstreifenform bewirkt, dass ausgehend von der Walzenmitte zu den Walzenrändern hin zunehmend mehr Feuchtmittel von der Walze 3 auf die weitere Walze 4 übertragen wird, wie dies in Figur 3d anhand des Verlaufes der Kurve der Schichtdicke 28 relativ zur Referenzlinie 29 deutlich wird. Die Walze 3 wirkt also in ihrer den Figuren 3a bis 3e zugrundeliegenden Einstellung wie eine taillierte Walze bezüglich der Flüssigkeitsübertragung.

Es versteht sich von selbst, dass mittels der Stellvorrichtung 22 die Festachse 13 in beliebige Zwischenstellungen zwischen den in den Figuren 1a, 2a und 3a angegebenen Drehwinkelstellungen einstellbar ist. Dies ermöglicht eine stufenlose Variation der Form des Kontaktstreifens 27 und des Schichtdickenprofils des übertragenen Flüssigkeitsfilms.

Das in den Figuren 4a bis 4e dargestellte Ausführungsbeispiel unterscheidet sich von dem in den Figuren 1a bis 3 e dargestellten konstruktiv nur bezüglich der Gestaltung der Lagersitze der Drehlager 10, 11, 12. Den Lagersitz 17 für das mittlere Drehlager 12 bildet hierbei die Umfangsfläche der Festachse 13. Demzufolge besteht zwischen der Rotationsachse 25 des mittleren Drehlagers 12 und der Rotationsachse 24 der Festachse 13 keine Exzentrizität. Jedoch besteht zwischen der Rotationsachse 26 des jeweiligen außen liegenden Drehlagers 10, 11 und der Rotationsachse 24 der Festachse 13 eine Exzentrizität e. Die außen liegenden Drehlager 10, 11 sitzen jeweils auf einem bezüglich der Rotationsachse 24 der Festachse 13 exzentrischen Lagersitz 30 bzw. 31, der durch die Umfangsfläche eines verjüngten und nicht mit der Rotationsachse 24 der Festachse 13 koaxialen Absatzes der Festachse 13 gebildet wird. In der in Figur 4a gezeigten Drehwinkelstellung der Festachse 13 sind die Exzentrizitäten e der außen liegenden Drehlager 10, 11 in bezüglich der weiteren Walze 4 entgegengesetzte Richtung gerichtet. Infolgedessen drücken die außen liegenden Drehlager 10, 11 derart auf die Enden des Walzenmantels 9, dass dieser zu besagten Enden hin zunehmend von der weiteren Walze 4 weg gebogen wird.

Die dadurch dem Walzenmantel 9 aufgezwungene axiale Krümmung oder Durchbiegung läuft mit dem Walzenmantel 9 nicht mit um. Vielmehr unterliegt der Walzenmantel 9 während seines Umlaufs um die Festachse 13 einer dynamischen Biegebelastung, der Walzenmantel 9 "arbeitet in sich". Diesbezüglich unterscheidet sich das hier beschriebene Ausführungsbeispiel aber nicht von den anderen Ausführungsbeispielen.

Figur 4b zeigt, dass die gekrümmte Mittellinie 23 des Walzenmantels 9 mit zu den Walzenenden hin zunehmendem Abstand von der Rotationsachse 24 der Festachse 13 verläuft, so dass diese Mittellinie 23 und die Mantellinie des Walzenmantels 9 im Walzenspalt 21 (vgl. Figur 1b) konvex bezüglich der weiteren Walze 4 verlaufen. Figur 4e zeigt den taillierten Kontaktstreifen 27, welcher aus der in Figur 4a dargestellten Drehwinkelstellung der Festachse 13 und somit der Lagersitze 30, 31 der außen liegenden Drehlager 10, 11 resultiert. Diese eingeschnürte Kontaktstreifenform bewirkt, dass von dem Walzenmantel 9 zu seinen beiden Enden hin zunehmend mehr Feuchtmittel auf die weitere Walze 4 übertragen wird, wie dies in dem Diagramm in Figur 4c dargestellt ist. Wird mittels der Stellvorrichtung 22 die Festachse 13 aus ihrer Drehwinkelstellung nach Figur 4a um 180° verdreht, wechselt sozusagen das Vorzeichen der Exzentrizität e der außen liegenden Drehlager 10, 11. Dadurch wird aus der bezüglich der weiteren Walze 4 konvexen Durchbiegung des Walzenmantels 9 eine konkave Durchbiegung, welche die in Figur 4d gezeigten Tonnenform des Kontaktstreifens 27 zur Folge hat, wobei die übertragene Feuchtmittelmenge von den Walzenrändern zur Walzenmitte hin abnimmt. In beiden Drehwinkelstellungen, der zuletzt beschriebenen und der in Figur 4a gezeigten, ist die Breite des Kontaktstreifens 27 in der Walzenmitte gleich groß. Durch die Verstellung der Drehwinkelstellung der Festachse 13 ändert sich nur der Anstieg oder Abfall der Breite des Kontaktstreifens 27 zu den Walzenrändern hin, wobei der Kontaktstreifen 27 in einer Figur 2a entsprechenden Zwischenstellung (90°) der Stellvorrichtung 22 auch bei dem Ausführungsbeispiel nach Figur 4a die in Figur 2e angegebene Rechteckform aufweist. Im Gegensatz zum Ausführungsbeispiel nach den Figuren 1a bis 3e, bei dem die Breite des Kontaktstreifens 27 sich infolge der Verdrehung der Festachse 13 nur im axialen Mittenbereich, nicht aber in den Randbereichen ändert, ändert sich beim Ausführungsbeispiel nach den Figuren 4a bis 4e die Breite des Kontaktstreifens 27 nur in den axialen Randbereichen, nicht aber im Mittenbereich.

Die Figuren 5a bis 5c zeigen ein Ausführungsbeispiel, das im Prinzip eine Kombination des Ausführungsbeispiels nach den Figuren 1a bis 3 e mit dem Ausführungsbeispiel nach den Figuren 4a bis 4e ist. Bei dieser Kombination entspricht der Lagersitz 17 des mittleren Drehlagers 12 eben diesem Lagersitz 17 in Figur 1a und entsprechen die Lagersitze 30, 31 der äußeren Drehlager 10, 11 ebendiesen Lagersitzen 30, 31 in Figur 4a. Somit sind die äußeren Lagersitze 30, 31 mit negativer Exzentrizität -e und der mittlere Lagersitz 17 mit positiver Exzentrizität +e relativ zur Rotationsachse 24 der Festachse 13 versetzt.

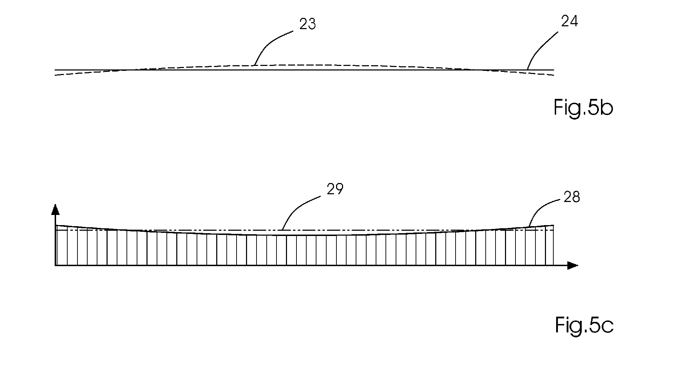

Bei einer Verdrehung der Festachse 13 verändert sich die Breite des von dem Walzenmantel 9 zusammen mit der weiteren Walze 4 gebildeten Kontaktstreifens 27 über dessen gesamte Länge. Bei einer Verdrehung der Festachse 13 in die eine Drehrichtung nimmt die Breite des Kontaktstreifens 27 in der Walzenmitte ab und nimmt gleichzeitig die Kontaktstreifenbreite an den Walzenrändern zu. Bei einer Verdrehung der Festachse 13 in die entgegengesetzte Drehrichtung wird der Kontaktstreifen in seiner axialen Mitte breiter und an den Kontaktstreifenenden schmaler. Die Wirkung der gegenläufigen Exzentrizitäten +e, -e wird auch aus Figur 5b deutlich, worin erkennbar ist, dass die Mittellinie 23 des axial gekrümmten Walzenmantels 9 die idealisierterweise ungekrümmt dargestellte Rotationsachse 24 der Festachse 13 in zwei Punkten schneidet. Dementsprechend verhält sich in Figur 5c die Kurve der übertragenen Schichtdicke 28 relativ zur Referenzlinie 29. An dieser Stelle ist anzumerken, dass bei sämtlichen Ausführungsbeispielen die geometrische Rotationsachse 24 der Festachse 13 parallel mit der geometrischen Rotationsachse der weiteren Walze 4 orientiert ist.

Das in Figur 6 dargstellte Ausführungsbeispiel des Feuchtwerks 2 unterscheidet sich von dem in Figur 1 dargestellten nur bezüglich der Ausbildung der Stellvorrichtung 22, welche hierbei statt einer manuellen Verdrehung eine motorische Verdrehung der Festachse 13 ermöglicht. Anstelle des Schneckenrades 15 ist ein Walzenschloss 33 vorgesehen, in welchem die Festachse 13 mittels einer Schraube befestigt ist. Das Walzenschloss 33 ist mit einem Stellmotor 32 verbunden, der das Walzenschloss 33 und mit diesem die Festachse 13 in die jeweils erforderliche Drehwinkelstellung dreht und in dieser hält. Gemäß Figur 6 ist die Motorwelle des Stellmotors 32 direkt mit dem Walzenschloss 33 verbunden. Davon abweichend kann der Stellmotor 32 auch über ein vorzugsweise selbsthemmendes Getriebe, z. B. ein Schneckengetriebe, mit dem Walzenschloss 33 verbunden sein. Ebenso könnte bei dem in Figur 1a gezeigten Ausführungsbeispiel ein ebensolcher Stellmotor zum Drehen der Schnecke 16 angeordnet sein. Eine Motorisierung der Stellvorrichtung 22 ist auch bei den übrigen Ausführungsbeispielen möglich. Bei dem Stellmotor 32 handelt es sich wie auch bei dem Motor 6 um einen Elektromotor.

Zu dem in Figur 7 dargestellten Ausführungsbeispiel gelangt man, wenn man bei dem in Figur 1b dargestellten Ausführungsbeispiel die Reibwalze 20 entfallen lässt, die Walze 3 der weiteren Walze 4 an einer anderen Umfangsstelle zuordnet und anstelle der Walze 3 die weitere Walze 4 in dem Feuchtkasten 5 platziert. Die Walze 3 ist der weiteren Walze 4 bei dem Ausführungsbeispiel nach Figur 1b im vierten Quadranten der weiteren Walze 4 zugeordnet und bei dem Ausführungsbeispiel nach Figur 7 im ersten Quadranten zugeordnet. Bei diesem Ausführungsbeispiel nach Figur 7 fungiert infolge der veränderten Anordnung des Feuchtkastens 5 die weitere Walze 4 als Tauchwalze und die Walze 3 als Dosierwalze. Hierbei schöpft die weitere Walze 4 das Feuchtmittel aus dem Feuchtkasten 5 und überrollt der Walzenmantel 9 die Feuchtmittelschicht auf der weiteren Walze 4, bevor letztere das Feuchtmittel auf die Feuchtauftragwalze 18 überträgt. Es versteht sich von selbst, dass bei dem in Figur 7 gezeigten Ausführungsbeispiel die Walze 3 bezüglich ihres den Walzenmantel 9 krümmenden Mechanismus nicht nur dem Ausführungsbeispiel der Figuren 1a bis 3 e entsprechend ausgebildet sein kann, sondern auch sämtlichen übrigen Ausführungsbeispielen entsprechend ausgebildet sein kann.

Die gemäß des Ausführungsbeispiels nach Figur 8 vorgesehene Walze 3 kann anstelle der Walze 3 jedes der anderen Ausführungsbeispiele verwendet werden. Gemäß Figur 8 ist die Festachse 13 axial gekrümmt, so dass sie über die Drehlager 10, 11, 12 ihre Krümmung dem Walzenmantel 9 aufzwingt. Die Festachse 13 wird seitens ihres Herstellers in so starkem Maße vorgebogen, dass die Festachse 13 nach ihrem Einbau in die Druckmaschine 1 auch unter der Vorbiegung entgegenwirkender Belastung die erforderliche Krümmung aufweist. Aufgrund der Krümmung der Festachse 13 ist dementsprechend deren Rotationsachse 24 gekrümmt. Die Drehlager 10, 11, 12 sitzen jeweils auf der Umfangsfläche der Festachse 13 fest und sind koaxial mit der Rotationsachse 24 angeordnet. Aufgrund der Krümmung ebendieser Rotationsachse 24 liegen die Rotationsachsen 25, 26 der Drehlager 10, 11, 12 nicht auf einer geraden gemeinsamen Linie und ist die Rotationsachse 25 des mittleren Drehlagers 12 somit außer Flucht mit den Rotationsachsen 26 der außen liegenden Drehlager 10, 11. Aufgrund der Krümmung der Festachse 13 und der daraus resultierenden Krümmung des Walzenmantels 9 weisen dessen Enden jeweils eine Exzentrizität e relativ zur Rotationsachse 25 des mittleren Drehlagers 12 auf. Bezüglich der durch ein Verdrehen der Festachse 13 bewirkten Veränderung der Kontaktstreifenbreite und somit der Flüssigkeitsübertragung wirkt die in Figur 8 dargestellte Ausführungsform der Walze 3 im Prinzip genauso wie deren zuvor beschriebenen Ausführungsformen.

Bei sämtlichen zuvor beschriebenen Ausführungsbeispielen ist davon ausgegangen worden, dass der Walzenmantel 9 eine über seine Länge konstante Rohrwanddicke aufweist. Bei jedem dieser Ausführungsbeispiele kann aber auch anstelle des Walzenmantels mit konstanter Rohrwanddicke der in Figur 9a dargestellte Walzenmantel 9 eingesetzt werden, welcher in axialer Richtung gestufte Wandstärken zur Erzeugung dementsprechend gestufter Biegelinien des Walzenmantels 9 aufweist. Hierbei nimmt von der Walzenmitte aus zu den Walzenenden hin der Innendurchmesser des Walzenmantels 9 zu und demzufolge dessen Wandstärke ab. Beispielsweise kann sich an jedem Walzenende eine Randzone 34 bzw. 35 befinden, deren axiale Länge in etwa 20 % bis 25 % der axialen Gesamtlänge des Walzenmantels 9 beträgt. Im Bereich dieser Randzonen 34, 35 hat der Walzenmantel 9 bzw. dessen einen gummielastischen Bezug 9.2 tragendes Trägerrohr 9.1 jeweils einen großen Innendurchmesser D, der größer als ein kleiner Innendurchmesser d ist. Diesen kleinen Innendurchmesser d weist der Walzenmantel 9 bzw. dessen Trägerrohr 9.1 im Bereich einer zwischen den Randzonen 34, 35 liegenden Mittenzone 36 auf. Wird der in Figur 9a dargestellte Walzenmantel 9 z. B. mittels der in Figur 8 gezeigten gekrümmten Festachse 13 oder mittels einer der in den Figuren 1a, 4a oder 5a gezeigten Festachsen 13 mit exzentrischem Drehlagersitz axial gekrümmt, ergibt sich die in Figur 9b dargestellte Form des Kontaktstreifens 27 zwischen der Walze 3 und der weiteren Walze 4.

Anstelle des in den zuvor beschriebenen Ausführungsbeispielen beschriebenen einzigen mittleren Drehlagers 12 können auch mehrere solche Drehlager auf der Festachse 13 zwischen den außen liegenden Drehlagern 10, 11 angeordnet sein.

### Bezugszeichenliste

- 1: Druckmaschine
- 2: Feuchtwerk
- 3: Walze
- 4: weitere Walze
- 5: Feuchtkasten
- 6: Motor
- 7: erstes Zahnrad
- 8: zweites Zahnrad
- 9: Walzenmantel
- 9.1: Trägerrohr
- 9.2: Bezug
- 10: außen liegendes Drehlager
- 11: außen liegendes Drehlager
- 12: mittleres Drehlager
- 13: Festachse
- 14: Drehlager
- 15: Schneckenrad
- 16: Schnecke
- 17: Lagersitz
- 18: Feuchtauftragwalze
- 19: Druckformzylinder
- 20: Reibwalze
- 21: Walzenspalt
- 22: Stellvorrichtung
- 23: Mittellinie
- 24: Rotationsachse (der Festachse 13)
- 25: Rotationsachse (des mittleren Drehlagers 12)
- 26: Rotationsachse (der außen liegenden Drehlager 10, 11)
- 27: Kontaktstreifen
- 28: Schichtdicke
- 29: Referenzlinie
- 30: Lagersitz
- 31: Lagersitz
- 32: Stellmotor
- 33: Walzenschloss
- 34: Randzone
- 35: Randzone
- 36: Mittenzone
- e, +e, -e: Exzentrizität
- d: kleiner Innendurchmesser
- D: großer Innendurchmesser

## Patentansprüche

1. Druckmaschinenwalze (3), umfassend eine Festachse (13) und einen Walzenmantel (9), der über ein erstes Drehlager (10), ein zweites Drehlager (11) und ein drittes Drehlager (12) auf der Festachse (13) gelagert ist, wobei das dritte Drehlager (12) außer Flucht mit dem ersten Drehlager (10) und dem zweiten Drehlager (11) und zwischen letzteren angeordnet ist, und wobei der Walzenmantel (9) mit einem Zahnrad (8) drehfest verbunden ist, das zusammen mit dem Walzenmantel (9) um die Festachse (13) drehbar ist.

2. Druckmaschinenwalze nach Anspruch 1,
wobei die Festachse (13) eine axiale Krümmung aufweist.

3. Druckmaschinenwalze nach Anspruch 1,
wobei das dritte Drehlager (12) im Wesentlichen achsparallel zu dem ersten Drehlager (10) und dem zweiten Drehlager (11) versetzt ist.

4. Feuchtwerk (2) einer Druckmaschine (1), umfassend eine erste Walze (3) und eine zweite Walze (4), wobei die erste Walze (3) an der zweiten Walze (4) anliegt und eine Festachse (13) und einen Walzenmantel (9) aufweist, der über ein erstes Drehlager (10), ein zweites Drehlager (11) und ein drittes Drehlager (12) auf der Festachse (13) gelagert ist, wobei das dritte Drehlager (12) außer Flucht mit dem ersten Drehlager (10) und dem zweiten Drehlager (11) und zwischen letzteren angeordnet ist, und wobei ein erstes Zahnrad (7) der zweiten Walze (4) und ein zweites Zahnrad (8) des Walzenmantels (9) im Zahneingriff miteinander stehen.

5. Feuchtwerk nach Anspruch 4,
wobei die Festachse (13) in einer Stellvorrichtung (22) zum zu und von der zweiten Walze (4) hin und weg erfolgenden Schwenken des dritten Drehlagers (12) gelagert ist.

6. Feuchtwerk nach Anspruch 4 oder 5,
wobei eine (3) der beiden Walzen (3, 4) eine Tauchwalze ist.

7. Druckmaschine (1), mit einer Druckmaschinenwalze (3) nach einem der Ansprüche 1 bis 3 und/oder mit einem Feuchtwerk (2) nach einem der Ansprüche 4 bis 6.

8. Verfahren zur Walzenjustage in einer Druckmaschine (1), wobei eine erste Walze (3) mit einer Festachse (13) und einem darauf drehbar gelagerten Walzenmantel (9) relativ zu einer zweiten Walze (4) justiert wird, indem bei bestehendem Zahneingriff eines ersten Zahnrades (7) der zweiten Walze (4) mit einem zweiten Zahnrad (8) des Walzenmantels (9) durch ein Drehen der Festachse (13) eine gekrümmte Mittellinie (23) des Walzenmantels (9) konvex oder konkav relativ zu der zweiten Walze (4) eingestellt wird.
